# EUROPÄISCHE PATENTSCHRIFT

(11) **EP 1 157 341 B1**
(45) Veröffentlichungstag und Bekanntmachung des Hinweises auf die Patenterteilung: **13.11.2002**
(21) Anmeldenummer: 00906174.8
(22) Anmeldetag: 01.02.2000
(51) Int. Cl.: G06F 13/40

(54) **OPTIMIERTER BUSANSCHLUSS ZUR ÜBERNAHME VON BUSTRANSAKTIONEN**
OPTIMISED BUS CONNECTION FOR MANAGING BUS TRANSACTIONS
CONNEXION DE BUS OPTIMISEE POUR LA PRISE EN CHARGE DE TRANSACTIONS DE BUS

(30) Priorität: 26.02.1999 DE 19908414
(43) Veröffentlichungstag der Anmeldung: 28.11.2001
(73) Patentinhaber: Fujitsu Siemens Computers GmbH, 81739 München (DE)
(72) Erfinder: STOESS, Annie, D-83043 Bad Aibling (DE); SCHACHTNER, Johann, D-85640 Putzbrunn (DE); ZIEMANN, Wolfgang, D-85635 Höhenkirchen-Siegertsbrunn (DE)
(74) Vertreter: Epping Hermann & Fischer
(86) Internationale Anmeldenummer: DE0000276
(87) Internationale Veröffentlichungsnummer: WO00052589

(56) Entgegenhaltungen:
- US-A- 5 835 739
- A. GRBIC ET AL.: "Design and implementation of the NUMAchine multiprocessor" PROCEEDINGS OF THE 35RD DAC, [Online] 1998, Seiten 66-69, XP002142702 Gefunden im Internet: <URL:http://citeseer.nj.nec.com/grbic98des ign.html> [gefunden am 2000-07-17]
- C. BRENDAN, S. TRAW: "Host Interfacing at a Gigabit" TECHNICAL REPORT MS-CIS-93-43, [Online] 21. April 1993 (1993-04-21), Seiten 1-13, XP002142703 CIS department, University of Pennsylvania Gefunden im Internet: <URL:http://citeseer.nj.nec.com/brendan93h ost.html> [gefunden am 2000-07-17]

## Beschreibung

Die Erfindung betrifft einen optimierten Busanschluss zur Übernahme von Bustransaktionen gemäß dem Oberbegriff des Anspruchs 1.

In einem Prozessorsystem laufen vielfältigste Bustransaktionen ab. Die Bustransaktionen können dabei in solche Transaktionen eingeteilt werden, die in einer streng logischen Reihenfolge abzuarbeiten sind, und können in solche Transaktionen eingeteilt werden, die nicht in einer streng logischen Reihenfolge abzuarbeiten sind.

Zur Übernahme von Bustransaktionen gibt es Busanschlüsse, die einen nach dem FIFO-Prinzip arbeitenden Zwischenspeicher aufweisen. Bustransaktionen, unabhängig davon, ob sie in streng logischer oder nicht streng logischer Reihenfolge abzuarbeiten sind, werden in der Reihenfolge ihres Eintreffens bei dem nach dem FIFO-Prinzip arbeitenden Zwischenspeicher in der Reihenfolge ihres Eintreffens zwischengespeichert und später in entsprechender Reihenfolge ausgelesen und abgearbeitet.

Bei den Bustransaktionen kommt es häufig vor, dass auf Ergebnisse anderer Bustransaktionen zu warten ist, beispielsweise um mit aktualisierten Parametern weiterarbeiten zu können. Durch den Umstand, dass die Bustransaktionen in der Reihenfolge des Eintreffens abgearbeitet werden, müssen Bustransaktionen, die unabhängig von solchen Transaktionen sind, dann trotzdem warten, bis die früher aufgetretenen Transaktionen abgeschlossen sind. Das Ergebnis ist insgesamt eine Verlangsamung und damit ein Leistungsverlust des Prozessorsystems.

Aufgabe der vorliegenden Erfindung ist es, einen optimierten Busanschluss anzugeben, durch den die Arbeitsgeschwindigkeit eines Prozessorsystems beschleunigt und damit seine Leistungsfähigkeit erhöht wird.

Diese Aufgabe wird ausgehend von einem Busanschluss der eingangs genannten Art durch einen optimierten Busanschluss gelöst, der die Merkmale des Anspruchs 1 aufweist.

Ein solcher Busanschluss klassifiziert und typisiert die auftretenden Bustransaktionen und weist sie jeweiligen parallel angeordneten Funktionslinien zu. Abhängig von der Klasse bzw. dem Typ einer Transaktion werden in den verschiedenen Funktionslinien die Transaktionen in einer solchen Weise zwischengespeichert, dass sie einerseits gemäß ihrer Klasse bzw. ihres Typs behandelt werden können, andererseits voneinander soweit getrennt sind, dass eine angepasste Reihenfolge in der Reihenfolge der Abarbeitung wählbar ist. Dazu trägt bei, dass einige Funktionslinien eine Parallelstruktur haben. Mit dem erfindungsgemäßen Busanschluss lassen sich daher Transaktionen vorziehen, so dass Wartezeiten, bis eine früher aufgetretene Transaktion abgeschlossen ist, in vielen Fällen ausgeschaltet werden können. Das Ergebnis ist eine Beschleunigung der Arbeitsweise und damit eine Erhöhung der Leistungsfähigkeit eines Prozessorsystems.

Vorteilhafte Ausgestaltungen der Erfindung sind Gegenstand von Unteransprüchen.

Danach sind für eine Abarbeitung anstehende Transaktionen nicht nur danach getrennt, ob sie nach einer strengen logischen Reihenfolge abzuarbeiten sind oder nicht, sondern sind die nicht streng nach einer logischen Reihenfolge abzuarbeitenden Transaktionen noch danach getrennt, ob es sich um Transaktionen des Typs Lesen oder Schreiben handelt. Lese-Transaktionen sind insbesondere leistungsbestimmend für ein Gesamtsystem. Ihnen ist daher besondere Priorität in der Abarbeitung einzuräumen.

Der erfindungsgemäße Busanschluss beseitigt, wie oben dargelegt, Staueffekte, die bei für eine Abarbeitung anstehenden Transaktionen auftreten können. Gibt es keine Staueffekte, kann es vorkommen, dass ganze Funktionslinien quasi leer bleiben, weil eintreffende Transaktionen sofort abgearbeitet werden können. Um nochmals Zeit zu sparen, die benötigt wird, um Transaktionen durch die sogenannten leeren Funktionslinien zu transportieren, gibt es bei vorteilhaften Ausgestaltungen der Erfindung Kurzschlusswege, die die sogenannten leeren Funktionslinien umgehen.

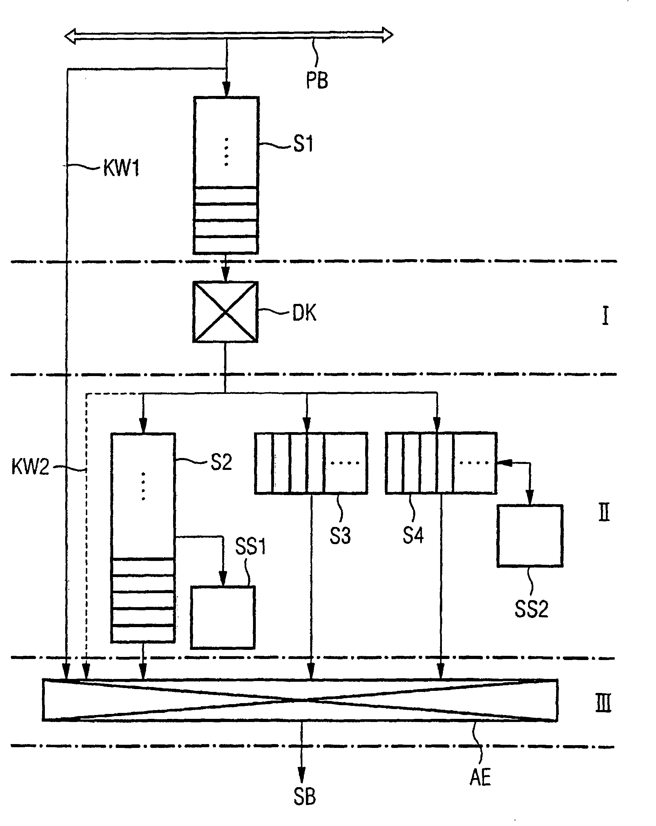

Nachfolgend wird ein Ausführungsbeispiel der Erfindung anhand einer Zeichnung näher erläutert. Darin zeigt die einzige Figur einen optimierten Busanschluss gemäß der Erfindung.

Die Figur zeigt einen Prozessorbus PB, der Teil eines in der Figur nicht näher angegebenen übergeordneten Prozessorsystems ist.

An den Prozessorbus PB ist ein an sich bekannter, nach dem FIFO-Prinzip arbeitender erster Zwischenspeicher S1 angeschlossen, der die eintreffenden Bustransaktionen in der Reihenfolge des Eintreffens speichert.

Im Anschluss an den ersten Speicher S1 sind drei hintereinander geschaltete Funktionsabschnitte I, II und III vorgesehen, von denen der erste Funktionsabschnitt I dafür zuständig ist, die im ersten Speicher S1 zwischengespeicherten Transaktionen durch einen Dekoder DK möglichst schnell auszulesen, zu klassifizieren und zu typisieren. Gemäß der Klassifizierung werden die Transaktionen in solche Transaktionen eingeteilt, die in streng logischer Reihenfolge abzuarbeiten sind. Außerdem werden die Transaktionen in solche Transaktionen eingeteilt, die nicht in streng logischer Weise abzuarbeiten sind. Innerhalb der Gruppe von Transaktionen, die nicht in streng logischer Reihenfolge abzuarbeiten sind erfolgt eine tiefergehende Typisierung danach, ob es sich bei den Transaktionen um Transaktionen des Typs Lesen oder des Typs Schreiben handelt.

Der zweite Funktionsabschnitt II nimmt die vom Dekodierer DK typisierten und klassifizierten Transaktionsvorgänge je nach Typisierung und Klassifizierung in einem von drei weiteren Speichern S2, S3, S4 auf, die in einer jeweiligen zugehörigen eigenen Funktionslinie angeordnet sind.

Im Speicher S2 sind die nach der Klasse "Abarbeitung in streng logischer Reihenfolge" klassifizierten Transaktionen unabhängig davon aufgenommen, ob sie dem Typ "Schreiben" oder "Lesen" entsprechen. Da diese Transaktionsvorgänge nach einer streng logischen Reihenfolge abzuarbeiten sind, nützt eine tiefergehende Unterteilung in solche Typen nicht.

Transaktionen, die dem Typ "Schreiben" entsprechen, haben einen ersten Schreibspeicher SS1 zugeordnet, in dem die zu schreibenden Informationen aufnehmbar sind. Startet ein an dem Prozessorbus PB angeschlossener Einzelprozessor einen Transaktionsvorgang der Klasse "Abarbeitung in streng logischer Reihenfolge" und des Typs "Schreiben", übergibt er den entsprechenden Transaktionsvorgang zusammen mit den zu schreibenden Informationen dem ersten Funktionsabschnitt I. Für den Einzelprozessor ist damit der Transaktionsvorgang beendet. Er kann sich anderen Aufgaben zuwenden. Der erste Funktionsabschnitt I sorgt dafür, dass der Transaktionsvorgang in den zweiten Speicher S2 und die zu schreibenden Informationen in den ersten Schreibspeicher SS1 jeweils des zweiten Funktionsabschnitts II geschrieben werden. Der zweite Speicher S2 ist nach dem FIFO-Prinzip ausgebildet, um dadurch die streng logische Abarbeitungsreihenfolge der Transaktionsvorgänge einhalten zu können.

Im vorliegenden Ausführungsbeispiel sind im Speicher S3 des zweiten Funktionsabschnitts II Transaktionsvorgänge der Klasse "Abarbeitung in nicht streng logischer Reihenfolge" und des Typs "Lesen" gespeichert. Da die Reihenfolge der Abarbeitung frei ist, ist der Speicher S3 gemäß einer parallelen Struktur aufgebaut, aus dem wahlfrei Inhalte entnommen werden können. Entprechendes gilt für den Speicher 4 des zweiten Funktionsabschnitts II, lediglich in Bezug auf den Typ "Schreiben" innerhalb der Transaktionsklasse "Abarbeiten in nicht streng logischer Reihenfolge". Da der Speicher S4 für die Transaktionsvorgänge des Typs "Schreiben" zuständig ist, ist diesem Speicher entsprechend dem ersten Schreibspeicher SS1 ein zweiter Schreibspeicher SS2 zugeordnet.

Die Speicher S3 und S4 ermöglichen es, dass insbesondere die Transaktionen der Klasse "Abarbeitung in nicht streng logischer Reihenfolge" und des Typs "Lesen" sofort und die Transaktionsvorgänge der Klasse "Abarbeitung in nicht streng logischer Reihenfolge" des Typs "Schreiben" möglichst bald abgearbeitet werden können.

Die jeweiligen Funktionslinien zugeordneten Komponenten des zweiten Funktionsabschnitts II führen auf eine den Funktionslinien des zweiten Funktionsabschnitts II gemeinsame Abarbeitungseinheit AE im dritten Funktionsabschnitt III. Die Abarbeitungseinheit AE vollzieht mit den von den Funktionslinien des zweiten Funktionsabschnitts II erhaltenen Transaktionen eine serielle Reihung für eine Weiterverarbeitung, wobei die Bedeutung der Herkunft der Transaktionen von den Funktionslinien berücksichtigt ist. Dabei können Transaktionen der Klasse "Abarbeitung in nicht streng logische Reihenfolge" Transaktionen der Klasse "Abarbeitung in streng logischer Reihenfolge" vorgezogen sein. Die auf diese Weise in günstigerer Reihenfolge vorliegenden Transaktionen werden dann an einen Systembus SB, der wieder Teil des in der Figur nicht näher angegebenen übergeordneten Prozessorsystems ist, weitergeleitet.

Kurzschlusswege KW1 bzw. KW2 ermöglichen den Transaktionsvorgängen das Überspringen einzelner Funktionsabschnitte. Sind zum Beispiel die aufeinanderfolgenden Komponenten der Funktionsabschnitte I und II leer, so kann ein Transaktionsvorgang über den Kurzschlussweg KW1 direkt vom Prozessorbus PB in die Abarbeitungseinheit AE des Funktionsabschnitts III gelangen. Ist der nach dem FIFO-Prinzip arbeitende Speicher S2 im Funktionsabschnitt II leer, kann ein ankommender Transaktionsvorgang sofort durch den Speicher geschleust und auf die Abarbeitungseinheit AE des Funktionsabschnitts III gelenkt werden. In beiden Fällen wird Zeit für die Durchreichung betreffender Transaktionsvorgänge eingespart.

## Patentansprüche

1. Optimierter Busanschluß zur Übernahme von Bustransaktionen, aufweisend einen nach dem FIFO-Prinzip arbeitenden ersten Speicher (S1), in dem aus einem übergeordnet vorhandenen Prozessorsystem ankommende und vom optimierten Busanschluß abzuarbeitende Transaktionsvorgänge in der Reihenfolge der ankommenden Transaktionsvorgänge zwischengespeichert werden,
**dadurch gekennzeichnet, daß**
- in Nachfolge zum ersten Speicher (S1) ein erster Funktionsabschnitt (I) zum Auslesen, Klassifizieren und Typisieren der im ersten Speicher (S1) zwischengespeicherten Bustransaktionen vorgesehen ist,
- daß durch den ersten Funktionsabschnitt (I) zum einen jeweils solche Transaktionen zu einer ersten Klasse von Transaktionen zusammenfaßbar sind, die in einer streng logischen Reihenfolge abzuarbeiten sind und
- daß zum anderen jeweils solche Transaktionen zu einer zweiten Klasse von Transaktionen zusammenfaßbar sind, die nicht in einer streng logischen Reihenfolge abzuarbeiten sind,
- daß in Nachfolge zum ersten Funktionsabschnitt ein zweiter Funktionsabschnitt (II) mit mehreren parallel angeordneten Funktionslinien, vorgesehen ist, von denen jeweils wenigstens eine Funktionslinie einer der beiden Klassen von Transaktionen zugeordnet ist,
- daß die Bustransaktionen durch den ersten Funktionsabschnitt (I) - in Abhängigkeit vom Ergebnis seiner Klassifizierung und Typisierung der Transaktionen - einer der Funktionslinien des zweiten Funktionsabschnitts (II) zugeordnet werden können,
- daß eine der ersten Klasse von Transaktionen zugeordnete erste Funktionslinie (S2) eine nach dem FIFO-Prinzip funktionierende Speicherstruktur aufweist,
- daß eine weitere Funktionslinie (S3, S4) eine für wahlfreie Zugriffe geeignete Speicherstruktur aufweist, und
- daß in Nachfolge des zweiten Funktionsabschnitts (II) ein dritter Funktionsabschnitt (III) mit einer den Funktionslinien des zweiten Funktionsabschnitts (II) gemeinsamen Abarbeitungseinheit (AE) vorgesehen ist, durch die die in den einzelnen Funktionslinien des zweiten Funktionsabschnitts (II) enthaltenen Transaktionen für eine Weiterleitung an das übergeordnet vorhandene Prozessorsystem in eine serielle Reihenfolge bringbar sind und
- die Abarbeitungseinheit (AE) in Abhängigkeit des Zustands des übergeordneten Prozessorsystems zum Vorziehen einer Transaktion aus der zweiten Klasse vor eine Transaktion aus der ersten Klasse geeignet ist.

2. Optimierter Busanschluß nach Anspruch 1,
**dadurch gekennzeichnet, daß**
für die zweite Klasse von Transaktionen im zweiten Funktionsabschnitt (II) gemäß einer zweigeteilten Typisierung von Transaktionen in Schreib- und Lesetransaktionen jeweils eine eigenständige Funktionslinie vorgesehen ist.

3. Optimierter Busanschluß nach Anspruch 1 oder 2,
**dadurch gekennzeichnet, daß**
für Bustransaktionen ausgehend vom Busanschluß bis zur Abarbeitungseinheit (AE) des dritten Funktionsabschnitts (III) ein in Abhängigkeit von einem Leerzustand in den ersten beiden Funktionsabschnitten (I, II) arbeitender Kurzschlußweg (KW1) realisiert ist.

4. Optimierter Busanschluß nach einem der vorherigen Ansprüche,
**dadurch gekennzeichnet, daß**
für die erste Klasse von Transaktionen ausgehend von einem Eingangspunkt in den zweiten Funktionsabschnitt (II) bis zur Abarbeitungseinheit (AE) des dritten Funktionsabschnitts (III) ein in Abhängigkeit von einem Leerzustand der ersten Klasse zugeordneten Funktionslinie arbeitender Kurzschlußweg (KW2) realisiert ist.

## Claims

1. Optimized bus connection for carrying out bus transactions, having a first memory (S1), which operates on the FIFO principle, and in which transaction processes, which arrive from a higher level processor system and are to be processed by the optimized bus connection, are buffer-stored in the sequence of the arriving transaction processes,
**characterized in that**
- the first memory (S1) is followed by a first function section (I) for reading, classification and typing of the bus transactions which are buffer-stored in the first memory (S1),
- **in that** the first function section (I) can firstly in each case combine such transactions to form a first class of transactions which need to be processed in a strictly logical sequence, and
- **in that**, secondly, such transactions can in each case be combined to form a second class of transactions, which do not need to be processed in a strictly logical sequence,
- **in that** the first function section is followed by a second function section (II) having a number of function lines which are arranged in parallel and each of which has at least one associated function line of one of the two classes of transactions,
- **in that** the bus transactions can be associated by the first function section (I) - as a function of the result of its classification and typing of the transaction - with one of the function lines of the second function section (II),
- **in that** a first function line (S2), which is associated with the first class of transactions, has a memory structure which functions on the FIFO principle,
- **in that** a further function line (S3,S4) has a memory structure which is suitable for random access, and
- **in that** the second function section (II) is followed by a third function section (III) with a processing unit (AE) which is shared by the function lines of the second function section (II) and which changes the transactions which are contained in the individual function lines of the second function section (II) to a serial sequence for passing to the higher-level processor system, and
- the processing unit (AE) is suitable for giving priority to a transaction from the second class over a transaction from the first class, as a function of the state of the higher-level processor system.

2. Optimized bus connection according to Claim 1,
**characterized in that**
an autonomous function line is in each case provided for the second class of transactions in the second function section (II) in accordance with bifurcated typing of transactions into write and read transactions.

3. Optimized bus connection according to Claim 1 or 2,
**characterized in that**
a short-circuit path (KW1), which operates as a function of an empty state in the first two function sections (I, II), is provided for bus transactions starting from the bus connection to the processing unit (AE) of the third function section (III).

4. Optimized bus connection according to one of the preceding claims,
**characterized in that**
a short-circuit path (KW2), which operates as a function of an empty state of the function line which is associated with the first class is provided for the first class of transactions, starting from an input point in the second function section (II) as far as the processing unit (AE) of the third function section (III).

## Revendications

1. Connexion de bus optimisée pour la prise en charge de transactions de bus, comportant une première mémoire (S1) qui fonctionne selon le principe FIFO et dans laquelle des opérations de transactions qui arrivent d'un système processeur de rang supérieur et qui sont à prendre en charge par la connexion de bus optimisée sont mémorisées temporairement dans l'ordre d'arrivée des opérations de transactions,
**caractérisée par le fait que**
- à la suite de la première mémoire (S1), il est prévu une première section de fonctions (I) pour lire, classer et associer à des types les transactions de bus mémorisées temporairement dans la première mémoire (S1),
- la première section de fonction (I) d'une part peut réunir en une première classe de transactions celles des transactions qui sont à prendre en charge dans un ordre logique strict et
- d'autre part peut réunir en une deuxième classe de transactions celles des transactions qui ne sont pas à prendre en charge dans un ordre logique strict,
- à la suite de la première section de fonctions, il est prévu une deuxième section de fonctions (II) avec plusieurs lignes de fonctions qui sont disposées parallèlement et parmi lesquelles à chaque fois au moins une ligne de fonction est associée à l'une des deux classes de transactions,
- les transactions de bus peuvent être associées par la première section de fonctions (I) - en fonction du résultat du classement et de l'association à des types des transactions - à l'une des lignes de fonctions de la deuxième section de fonctions (II),
- une première ligne de fonction (S2) associée à la première classe de transactions a une structure de mémoire fonctionnant selon le principe FIFO,
- une autre ligne de fonction (S3, S4) a une structure de mémoire convenant à des accès aléatoires, et
- à la suite de la deuxième section de fonctions (II), il est prévu une troisième section de fonctions (III) avec une unité de prise en charge (AE) qui est commune aux lignes de fonctions de la deuxième section de fonctions (II) et par laquelle les transactions contenues dans les différentes lignes de fonctions de la deuxième section de fonctions (II) peuvent être mises dans un ordre sériel pour une retransmission au système processeur de rang supérieur et
- l'unité de prise en charge (AE) est capable, en fonction de l'état du système processeur de rang supérieur, d'amener une transaction de la deuxième classe devant une transaction de la première classe.

2. Connexion de bus optimisée selon la revendication 1,
**caractérisée par le fait que**, pour la deuxième classe de transactions, il est prévu dans la deuxième section de fonctions (II), selon une autre association des transactions à des types transactions d'écriture et transactions de lecture, respectivement des lignes de fonction indépendantes.

3. Connexion de bus optimisée selon la revendication 1 ou 2,
**caractérisée par le fait que**, pour des transactions de bus partant de la connexion de bus et allant à l'unité de prise en charge (AE) de la troisième section de fonctions (III), il est réalisé un court-circuit (KW1) travaillant en fonction d'un état vide dans les deux premières sections de fonctions (I, II).

4. Connexion de bus optimisée selon l'une des revendications précédentes,
**caractérisée par le fait que**, pour la première classe de transactions partant d'un point d'entrée dans la deuxième section de fonctions (II) et allant à l'unité de prise en charge (AE) de la troisième section de fonctions (III), il est réalisé un court-circuit (KW2) travaillant en fonction d'un état vide de la ligne de fonction associée à la première classe.
